(19) Europäisches Patentamt / European Patent Office / Office européen des brevets

(11) **EP 4 629 151 A1**

(12) **EUROPEAN PATENT APPLICATION**

(43) Date of publication:
**08.10.2025  Bulletin 2025/41**

(21) Application number: **24168514.8**

(22) Date of filing: **04.04.2024**

(51) International Patent Classification (IPC):
**G06Q 20/06** (2012.01)    **G06N 10/60** (2022.01)
**G06Q 20/34** (2012.01)    **G06Q 20/38** (2012.01)

(52) Cooperative Patent Classification (CPC):
**G06Q 20/0655; G06N 10/60; G06Q 20/34;
G06Q 20/382**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Mastercard International Incorporated
Purchase, NY 10577 (US)**

(72) Inventor: **MALEKI, Mehrdad
Maynooth, W23TR81 (IE)**

(74) Representative: **Murgitroyd & Company
165-169 Scotland Street
Glasgow G5 8PL (GB)**

(54)    **METHODS AND SYSTEMS FOR A QUANTUM CARD**

(57)    A system 500 comprises a quantum card issuer authority 502, a quantum card reader 504 and a quantum card 506. The quantum card 506 comprises a quantum memory 508 and a classical memory 509. The quantum memory 508 comprises a quantum system capable of storing a currency state generated by the quantum card reader or the quantum card issuer authority 504. The classical memory 509 is configured to store a serial number associated with a user.

Figure 5

EP 4 629 151 A1

**Description**

**FIELD OF THE INVENTION**

The present disclosure relates to a quantum currency. The present disclosure more particularly relates to methods, systems and tools for a quantum card capable of carrying and implementing transactions in a quantum currency. The present disclosure may find particular use in preventing transaction fraud and theft in currency systems.

**BACKGROUND TO THE INVENTION**

Traditional currency systems typically rely on physical objects having a predetermined value to enable transactions. For example, transactions may involve the exchange of coins and/or notes corresponding to a predetermined amount of a currency for particular goods and/or services. A well-known drawback of such traditional currency systems is that they are susceptible to forgeries, that is, the coins and notes on which the system relies may be accurately copied by illegitimate entities. While security features such as serial numbers or watermarks may be used to increase the complexity of producing forgeries, it may be impractical to verify the authenticity of such security features during the short time that a transaction takes place. Furthermore, once realistic forgeries are in circulation it is difficult to identify and/or destroy them.

Digital technologies have helped to transform the traditional currency systems into the modern currency systems in wide use today. Modern digital currencies typically rely on advanced cryptographic techniques and the secure transfer of information between the parties to a transaction. In a typical example, a user may possess a credit or debit card and be in possession of a user secret (e.g. a PIN). Initially, the user provides the credit or debit card and the secret to a merchant. The merchant then sends a request to a central authority, such as a bank, asking for the central authority to transfer funds from an account associated with the user to an account associate with the merchant. The request includes information derived from the credit or debit card and the user secret. If the central authority verifies that the information received from the merchant is authentic, then the central bank fulfils the request of the merchant.

While modern digital currency systems do provide an increased level of security and verification not available in traditional systems, digital currency systems are still susceptible to forgery, for example if the information contained in the credit card is cloned or copied, and/or if the user secret is stolen or successfully inferred. Furthermore, the security of such digital currency systems is reliant on cryptographic protocols, such as RSA. While such protocols are thought of as being classically secure, they are not 'quantum safe' i.e. they are susceptible to 'brute force' attacks, or Shor's Algorithm from quantum computers. As such, the recent rise of more powerful quantum computers poses a potential threat to the security of modern digital currency systems.

The present disclosure has been devised to mitigate or overcome at least some of the above-mentioned problems.

**SUMMARY OF THE DISCLOSURE**

In accordance with an aspect of the present disclosure, there is provided a method for implementation by a quantum card reader, the method comprising: receiving a quantum card associated with a user, wherein the quantum card comprises a currency state, wherein the currency state is a quantum state that is representative of an amount of a quantum currency; receiving a request for a transaction; requesting permission from the user to perform the transaction, wherein requesting permission from the user comprises sending a request message to a device associated with the user; receiving a response message from the device associated with the user; and if the response message indicates that the user does not grant permission for the transaction, modifying the currency state. Advantageously, the currency state stored on the quantum card cannot be copied, as a result of the no-cloning theorem. Therefore, it is not possible for a malicious actor to reproduce a forged currency state for use in a transaction.

In some embodiments, modifying the currency state comprises measuring and/or destroying the currency state. Advantageously, any currency state held on a quantum card can be modified, measured and/or destroyed by the quantum card reader, for example in response to a message received from a user and/or a central authority.

In some embodiments, destroying the currency state comprises causing the quantum system to enter its ground state. Advantageously, causing the quantum system to enter its ground state results in removing all traces of the currency state from the quantum card.

In some embodiments, the method further comprises, if the response message from the device associated with the user indicates that the user grants permission for the transaction, updating the currency state based on the transaction. Advantageously, updating the currency state allows the quantum card to be used in further transactions.

In some embodiments, the method further comprises, if the response message from the device associated with the user indicates that the user grants permission for the transaction, updating a ledger based on the transaction.

In some embodiments, updating the currency state comprises recovering a balance state from the currency state. In some embodiments, the balance state is a quantum state that is representative of an amount of the quantum currency.

In some embodiments, updating the currency state comprises applying a unitary payment operator on the balance state to determine an updated balance state.

In some embodiments, updating the currency state comprises preparing an updated currency state from the updated balance state; and loading the updated currency state onto the quantum card.

In some embodiments, recovering the balance state from the currency state comprises applying an inverse Quantum Fourier Transform on the currency state.

In some embodiments, the method further comprises: if the response message from the device indicates that the user grants permission for the transaction, reading a balance associated with the user from a ledger. Advantageously, the quantum card reader may be configured to ensure that the quantum card contains sufficient funds before modifying or disturbing the currency state.

In some embodiments, the method further comprises, if the balance is less than the transaction amount, sending a notification to the device associated with the user.

In some embodiments, the method further comprises requesting permission from a quantum card issuer authority to perform the transaction by sending a request message to the quantum card issuer authority.

In some embodiments, the method further comprises receiving a response message from the quantum card issuer authority.

In some embodiments, the method further comprises, if the response message indicates that the quantum card issuer authority grants permission for the transaction, updating the currency state on the card based on the transaction.

In some embodiments, the method further comprises, if the response message indicates that the quantum card issuer authority grants permission for the transaction, updating a ledger based on the transaction.

In some embodiments, the method further comprises, if the response message from the quantum card issuer authority indicates that the quantum card issuer authority does not grant permission for the transaction, receiving an instruction from the quantum card issuer authority to modify the currency state by measuring and/or destroying the currency state.

In some embodiments, the quantum card comprises a quantum memory and a classical memory.

In some embodiments, the quantum memory comprises a quantum system capable of storing the currency state.

In some embodiments, the classical memory is configured to store a serial number associated with a user.

In accordance with another aspect of the present disclosure, there is provided a method for implementation by a quantum card issuer authority, the method comprising: receiving a quantum card, wherein the quantum card comprises a quantum memory and a classical memory, wherein the quantum memory comprises a quantum system capable of storing a currency state; preparing a currency state based on a balance associated with a user, wherein the currency state is a quantum state that is representative of an amount of a quantum currency; and loading the currency state in the quantum memory of the quantum card. Advantageously, the currency state prepared by the quantum card issuer authority cannot be copied, as a result of the no-cloning theorem. Therefore, only the quantum card issuer authority is able to produce a legitimate currency state for use in a transaction.

In some embodiments, the classical memory comprises a serial number. Advantageously, the serial number may be used to uniquely identify the quantum card, or the summary information about the quantum money like the value amount, the issued time and the issuer bank's name.

In some embodiments, the method further comprises reading the serial number from the classical memory; and associating the user with the serial number.

In some embodiments, the method further comprises identifying the balance associated with the user from a ledger.

In some embodiments, the method further comprises generating a balance state.

In some embodiments, the balance state is a quantum state that is representative of an amount of the quantum currency.

In some embodiments, the method further comprises applying a Quantum Fourier Transform on the balance state. Advantageously, the currency state loaded on the quantum card may be obfuscated using a strong one-way function.

In accordance with another aspect of the present disclosure, there is provided a system comprising: a quantum card reader; and a quantum card comprising a quantum memory and classical memory, wherein the quantum memory comprises a quantum system capable of storing a currency state, and wherein the classical memory is configured to store a serial number associated with a user.

In some embodiments, the system further comprises a quantum card issuer authority.

In accordance with another aspect of the present disclosure, there is provided a quantum card for storing a quantum currency, the quantum card comprising a quantum memory and a classical memory, wherein the quantum memory comprises a quantum system capable of storing a currency state generated by a quantum card reader or a quantum card issuer authority, and wherein the classical memory is configured to store a serial number associated with a user.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

## BRIEF DESCRIPTION OF THE DRAWINGS

One or more embodiments of the disclosure will now be described, by way of example only, with reference to the accompanying drawings, in which:

Figure 1 shows an example computer system for implementing aspects of the present invention;

Figure 2 shows a network environment for implementing aspects of the present invention;

Figure 3 illustrates a method for using a quantum card in accordance with an aspect of the present invention;

Figures 4A and 4B show a further method for using a quantum card in accordance with an aspect of the present invention;

Figure 5 shows an example system for implementing aspects of the present invention.

Note that the drawings are schematic and accompany the description, illustrating preferred and exemplary embodiments and not necessarily being drawn to scale.

## DETAILED DESCRIPTION

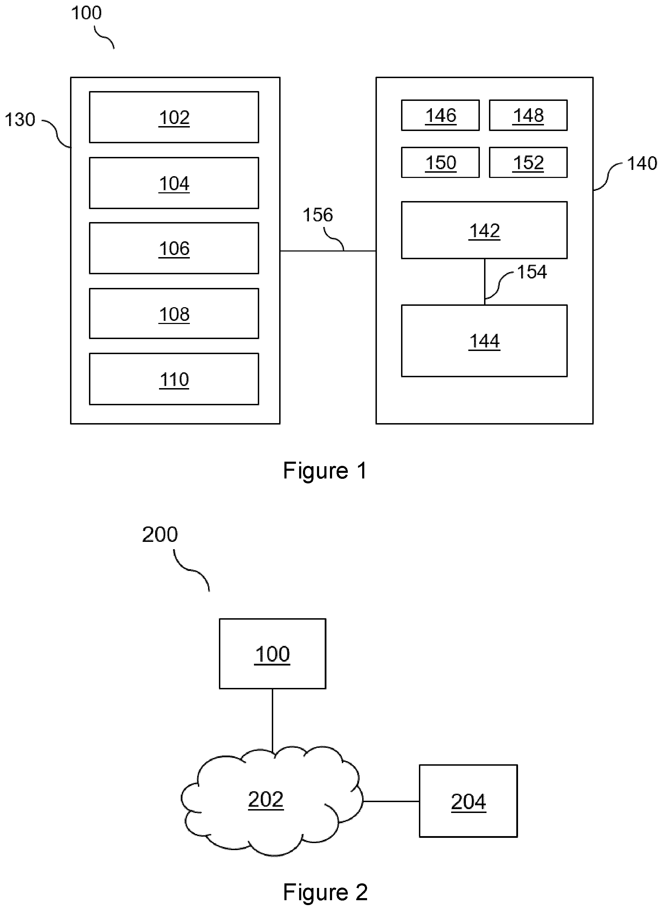

Figure 1 shows an example computing system 100 for implementing the present invention. One or more such computer systems 100 are arranged to perform or execute one or more steps of the methods described herein. In particular, software running on one or more computer systems 100 perform one or more steps of the methods described herein.

The computing system 100 comprises a classical computer 130 coupled to a quantum computer 140 via an interface 156.

The classical computer 130 comprises a processing element 102, a memory unit 104, an input/output (I/O) interface 106, a communications interface 108, and a bus 110. Whilst Figure 1 illustrates a classical computer 130 having particular components and in a particular arrangement, it can be envisaged that the classical computer 130 comprises any suitable number of components in any suitable arrangement of components. The classical computer 130 may further comprise additional classical computing elements as known in the art.

The processing element 102 is arranged to perform operations, such as arithmetical and logical operations, on data, for example data stored on the memory device 104. The processing element 102 is of any suitable construction for performing these operations. For example, the processing element 102 comprises one or more hardware components for performing these operations, such as processors, e.g., one or more central processing units (CPUs), accelerator processors, application specific processors and/or field programmable gate arrays (FPGAs), and other equipment such as Application Specific Integrated Circuits (ASICs). The processing element 102 performs operations including: fetching instructions associated with the methods disclosed herein from program memory, such as a RAM component of the memory device 104; decoding the instructions; and executing the instructions to carry out one or more steps of the methods described herein.

The memory unit 104 is arranged to communicate with the processing element 102, for example via the bus 110. The memory unit 104 comprises one or more hardware components, such as one or more primary memory units and one or more secondary memory units. The one or more primary memory units, for example including a random access memory (RAM) unit, can temporarily store data for reading and writing purposes by the processing element 102. The primary memory may be any suitable RAM, and may comprise one or more RAM units. The present disclosure is not limited to a particular type of primary memory. The one or more secondary memory units comprise memory, i.e., computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive. The secondary memory may be any suitable memory, and may comprise one or more secondary memory units. The present disclosure is not limited to a particular type of secondary memory. The memory stores software comprising a respective instance of at least one client application arranged to run on the processing element 102 for carrying out various steps of the methods disclosed herein. The client application may be initially provided to the classical computer 130 on suitable computer-readable storage medium or media, e.g., downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The I/O interface 106 facilitates communication between the classical computer 130 and one or more computer devices arranged to facilitate communication between a user and the classical computer 130. For example, the one or more computer devices may include, but is not limited to including, a display device, a keyboard, a speaker, a printer, any other suitable device, or any combination of devices thereof.

The communication interface 108 facilitates communication between the classical computer 130 and any other one or more computer systems and/or one or more networks. The communication interface 108 may comprise a network interface controller, network adapter, wireless NIC, or wireless adapter for communicating with a network.

The quantum computer 140 comprises a quantum computing unit 142 and a quantum memory unit 144, a plurality of coupling devices 146, a bias device 148, and a state determination device 150. The quantum computing unit 142 and/or quantum memory unit 144 comprises a number N of qubits 152. The qubits 152 may be for example, superconducting flux devices 152 having a circulating current. For example, the superconducting flux devices 152 may comprise a loop of superconducting material interrupted by at least one Josephson junction, as is known in the art. Further qubit implementations may be envisaged. The quantum computing unit 142 is configured to provide data to, and receive data from, the quantum memory unit 144 by means of a memory interface 154. A "state" of the quantum computing unit 142 corresponds to the respective state of all of the N qubits 152. An example state of a qubit is a 0 state. The 0 state may correspond to, for example, a clockwise current around the superconducting flux devices 152 which may induce a downward magnetic field. A counterclockwise current around the superconducting flux devices may induce an upwards magnetic field which references a state 1. The state of the quantum computing unit 142 may be described by a bit string having a length N. Thus, there are $2^N$ possible configurations for the state of the quantum computing unit 142. The quantum computer 140 is preferably suitable for implementing quantum circuits. Other quantum computing models may be envisaged.

Figure 2 shows an example network environment for facilitating implementation of the present invention.

The classical computer 130 may communicate with any network, such as a network 202, via the communication interface 108. The network 202 may comprise an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or any combination thereof. Any network 202 may be envisaged. The network 202 can facilitate communication between the classical computer 130 and one or more third party computer systems 204. It will be appreciated that the classical computer 130 and the third party computer systems 204 may be connected to each other directly, such that the network 202 is not needed.

Third party computing system 204 may be a network addressable computing system. Third party computing system 204 may generate, store, receive, and transmit data. Communication with the third party computing system 204 may comprise the use of one or more application programming interfaces (APIs). One or more third party computing systems 204 may be present, and each of the one or more third party computing systems 204 may be associated with a respective third party.

Issuing a quantum card

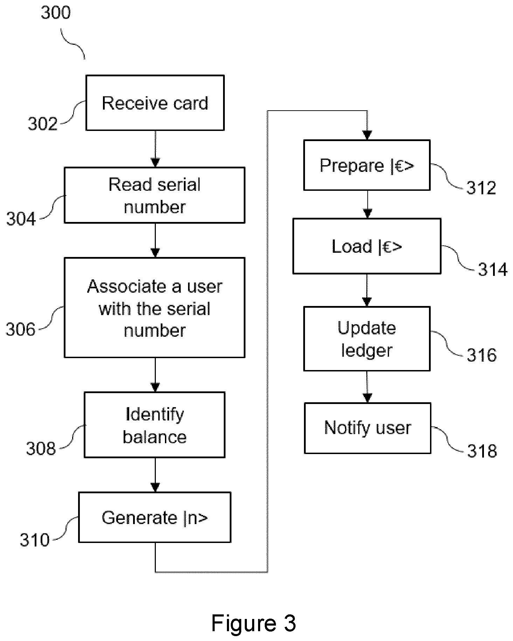

Figure 3 shows a flow diagram of a method 300 for enabling use of a quantum card which carries a quantum currency, in accordance with an aspect of the present disclosure. In particular, the method 300 is a method for preparing a suitable quantum state and loading that quantum state onto a quantum card. The method 300 may be carried out at a quantum card issuer authority, for example a central bank or other authority which issues currency, which may be implemented at a computing system such as the example computing system 100 shown in figure 1.

At step 302 the method 300 comprises receiving a quantum card. In particular, the quantum card may be a new or 'blank' quantum card received by the card issuer authority. The quantum card comprises a quantum memory and a classical memory. An example computing system 100 suitable for implementing the quantum card is shown in figure 1. The quantum memory of the quantum card (e.g. the quantum computing unit 142 and/or the quantum memory unit 144) comprises a quantum system (e.g. a plurality of qubits) capable of storing a currency state. The classical memory (e.g. memory unit 104) is configured to store a serial number. The serial number may be a unique number that can be used to identify the quantum card.

At step 304 the method 300 comprises reading the serial number from the classical memory. The serial number may be pre-loaded in the classical memory, and reading the serial number from the classical memory may involve reading or fetching the pre-loaded serial number. Alternatively, for example in the case of a new or 'blank' quantum card, the serial number may be written in the classical memory by the quantum card issuer authority before the serial number is read at step 304. The quantum card issuer authority may overwrite an existing serial number with a new serial number before the serial number is read at step 304.

At step 306 the method 300 comprises associating a user with the serial number. For example, the quantum card issuer authority may maintain a ledger containing information about users, such as account numbers, user balances (i.e. the amount of currency the user holds in an account) and the serial numbers of any quantum cards that have been issued to each respective user, and the currency balances on said cards. The ledger may be stored locally at the quantum card issuer authority, or in cloud storage. The ledger may contain information about users, for example names, addresses, and information identifying any user devices associated with users. In examples, the quantum card issuer authority and/or ledger may contain further information including user email addresses, user phone numbers and/or other identifiers for each user. Alternatively or additionally, information about a particular user, such as a name, address, email address and/or phone number may be stored in the classical memory of the quantum card (e.g. memory unit 104) issued to said user, optionally in an encrypted form.

At step 308 the method 300 comprises reading the ledger, for example identifying the balance associated with the user from the ledger. In particular, the quantum card issuer authority may inspect the ledger to identify how much balance the user has, and to determine how much quantum currency may be issued to the user. The quantum card issuer authority may be able to issue all of the balance shown on the ledger to the user. Alternatively, the quantum card issuer authority may issue less than the total balance to the user, for example if the user does not wish to withdraw all of their funds. The quantum card issuer authority may issue more than the total balance to the user, for example if the user is able to rely on credit from the quantum card issuer authority.

At step 310 the method 300 comprises generating a balance state $|n\rangle$. The balance state $|n\rangle$ is a quantum state that is representative of an amount $n$ of quantum currency, where $n \geq 1$ and $|n\rangle$ is the $n$th quantum state of a quantum system. In examples, the balance state $|n\rangle$ corresponds to the amount of quantum currency that is to be issued to the user and loaded onto the quantum card. In this scheme, possible balance states include $|1\rangle$, $|2\rangle$, $|3\rangle$ etc. (i.e. $n = 1, 2, 3...$) and negative quantum card balances are not permitted. As will be explained in further detail below, in examples it is possible to perform payment transactions in multiples of 1 unit of quantum currency, and to receive multiples of 1 unit of quantum currency, by applying suitable operators to the balance state $|n\rangle$.

At step 312 the method 300 comprises preparing a currency state $|\text{€}\rangle$. The currency state $|\text{€}\rangle$ is a quantum state that is representative of an amount of the quantum currency. In examples, the currency state $|\text{€}\rangle$ is based at least in part on the balance associated with a user identified in step 308. In examples, the currency state $|\text{€}\rangle$ is based at least in part on the balance state $|n\rangle$ generated in step 310. Advantageously, the currency state stored on the quantum card cannot be copied, as a result of the no-cloning theorem. Therefore it is not possible for a malicious actor to reproduce a forged currency state for use in a transaction. Only the quantum card issuer authority is able to produce a legitimate currency state for use in a transaction.

In examples, the currency state $|\text{€}\rangle$ is the quantum state that is to be stored in the quantum memory of the quantum card (e.g. the quantum computing unit 142 and/or the quantum memory unit 144). The currency state $|\text{€}\rangle$ may be prepared in a number of ways. Several example schemes for preparing the currency state $|\text{€}\rangle$ are outlined as follows.

According to a first example for preparing the currency state, the currency state $|\text{€}\rangle$ is the balance state $|n\rangle$ (i.e. we generate $|\text{€}\rangle$ from $|n\rangle$). This scheme may be expressed as:

$$|n\rangle \rightarrow |\text{€}\rangle$$

In this example, if an adversary steals the quantum card and performs a measurement in the currency state $|\text{€}\rangle$, then the only information that can be found by the adversary is the balance on the card, i.e. the balance state $|n\rangle$. As will be appreciated, the adversary can only access the balance state $|n\rangle$ if they have access to a quantum computer.

According to a second example for preparing the currency state $|\text{€}\rangle$ a Quantum Fourier Transform is applied on the balance state $|n\rangle$. In this case the superposition of all possible states is generated,

$$QFT|n\rangle = \frac{1}{2^{\frac{n}{2}}} \sum_{\{k=0\}}^{\{2^n-1\}} e^{\frac{2\pi ixk}{2^n}} |k\rangle$$

In this example, direct measurements performed on t$QFT|n\rangle$ will yield any of the possible basis states $|k\rangle$ with roughly equal probability. In this way, the balance state $|n\rangle$ is obfuscated.

For the periodic function $f:\{0,1\}^n \to \{0,1\}^n$ with unknown period $s$, i.e., $f(x \oplus s) = f(x)$, consider $s$ as a secrete key used to prepare the currency state to be stored on the quantum card. The following Quantum Oracle acts as a one-way function:

$$U_f |k\rangle |0\rangle = |k\rangle |f(k)\rangle$$

Now the following currency state for storage on the quantum card is prepared as follows:

$$|n\rangle \to QFT|n\rangle \to U_f(QFT\,|\,n\rangle|0\rangle) \to |\text{€}\rangle$$

If adversary has access to Quantum Card, if he/she don't know secrete key, he cannot know what is $U_f$. So, the scheme is safe against classical attack. In this case, if the adversary has the access to a quantum computer, then they will be able to find the secret key $s$ and by performing a Quantum Fourier transform, and hence constructing $f$ and consequently $U_f$ which breaks the scheme. However, if the adversary has only access to classical computation, then they cannot break this system to reproduce $|n\rangle$ from $|\text{€}\rangle$.

According to a third example for preparing the currency state, the currency state $|\text{€}\rangle$ is again prepared by applying a Quantum Fourier Transform on the balance state $|n\rangle$. Advantageously, the third example scheme is also secure against both classical and quantum attacks.

Consider the function $f:D_N \to \{0,1\}^m$ such that there exists an $h \in D_N$ that is period of this function, i.e., $f(x \cdot h) = f(x)$. Here $D_N$ is the dihedral group, which is the symmetric group of N-sided regular polygon and can be generated by two elements: a rotation $r$ and a reflection $s$ such that:

$$r^N = 1, s^2 = 1, srs^{-1} = r^{-1}$$

In this case the Unitary operator $\tilde{U}_f$ acts as follows:

$$\tilde{U}_f : \frac{1}{\sqrt{|D_N|}} \sum_{\{g \in D_N\}} |g\rangle |0^m\rangle \mapsto \frac{1}{\sqrt{|D_N|}} \sum_{\{g \in D_N\}} |g\rangle |f(g)\rangle$$

By measuring the second register, one obtains $|f(g_0)\rangle$, and the first register collapses to a superposition of all group elements $g$, that satisfy $f(g) = f(g_0)$. This provides a hint about the secrete key but does not reveal it. By Quantum Fourier Sampling, if a QFT is applied on the dihedral group to the first register, then this gives peaks at characters of the dihedral group that are orthogonal to the hidden subgroup. So, the process of preparing quantum state on the card will be as follows:

$$|n\rangle \to \frac{1}{\sqrt{|D_N|}} \sum_{\{g \in D_N\}} |g\rangle |0^m\rangle \to \tilde{U}_f\left(\frac{1}{\sqrt{|D_N|}} \sum_{\{g \in D_N\}} |g\rangle |0^m\rangle\right) \to |\text{€}\rangle$$

Where $|n\rangle$ is an arbitrary node on the dihedral. This scheme is secure against quantum attack. The best known quantum algorithms for finding generator of a dihedral group are currently sub-exponential. The third approach is based on the two (or more) hidden subgroup problem of dihedral group. Consider two hidden subgroup of $D_N$, namely $H_1$ and $H_2$. Consider the following functions:

$$f_i : D_N \to \mathbb{C}^2, i = 1,2$$

such that $f_1(h_1) = |0\rangle$ on the cosets of $H_1$ and $f_2(h_2) = |1\rangle$ on the cosets of $H_2$. Then constructing the function

$$f = f_1 \otimes f_2 : D_N \times D_N \to \mathbb{C}^2 \otimes \mathbb{C}^2$$

such that:

$$f(h1, h2) = f_1(h_1) \otimes f_2(h_2)$$

In the cosets of $H_1$ and $H_2$ the value of this function is $|01\rangle$. Now we could use this function as oracle to prepare the quantum state. The attacker even with having access to a quantum computer needs to recover two hidden subgroups, which increases the complexity of the problem. It is trivial that this scheme can be extended to any number of the hidden subgroup. If we use two hidden subgroups as the private key, then the adversary will need to find two hidden subgroups (or N number of subgroups) which increases the complexity of the problem by a linear factor. But recovering each subgroup requires a quantum computer, so the linear increase in the complexity of the problem here is according to the quantum computational resources.

The choice of scheme for preparing the currency state $|€\rangle$ at step 312 depends on the level of security required by the user of the quantum card and/or quantum currency issuer authority.

At step 314 the method 300 comprises loading the currency state in the quantum memory of the quantum card. For example, the currency state $|€\rangle$ may be written to and stored in the quantum memory of the quantum card (e.g. the quantum computing unit 142 and/or the quantum memory unit 144) by the quantum card issuer authority. As a result of step 314, the quantum card now carries an amount of quantum money for use in quantum card transactions.

At step 316 the method 300 comprises updating the ledger. In particular, the ledger may be updated to show that the user has been issued a quantum card having an amount of quantum currency. The ledger may be updated with the serial number of the quantum card and the amount of quantum currency stored on the card.

At step 318 the method 300 comprises notifying the user. For example, a message may be sent to a device associated with the user, to inform the user that the quantum card has been loaded with a currency state $|€\rangle$ and is ready to be used for transactions. Notifying the user may include sending at least some of the information stored on the ledger to the device associated with the user, for example via email or SMS.

Use of a quantum state to store the balance information on the card is beneficial because even if the card is stolen it cannot be copied (no-cloning theorem). In the simplest case, the adversary without having access to a quantum computer cannot read the balance on the card. In the second case, the adversary with a quantum computer can have partial information about the balance on the card. In the third case, the adversary even with having access to a strong quantum computer cannot easily read the content of the card. In all of the above cases, in the worst-case scenario, the only information that an adversary having access to a powerful quantum computer can have is the balance state. However, the adversary is unable to produce a copy of the currency state and therefore is unable to perform a transaction.

Using a quantum card

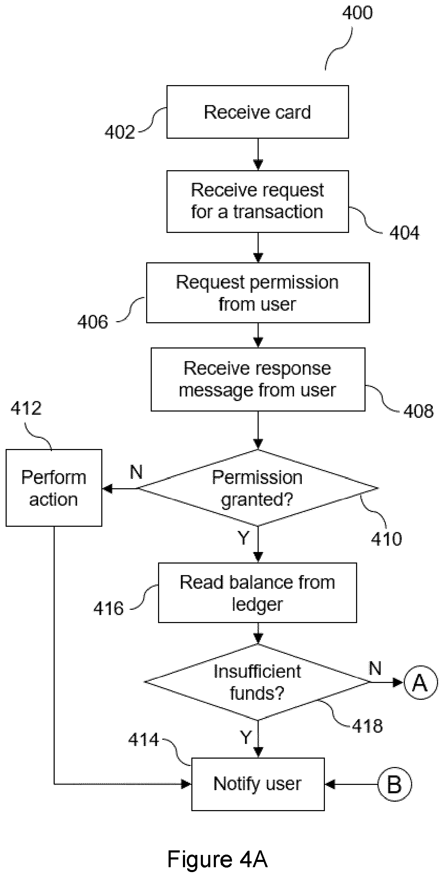

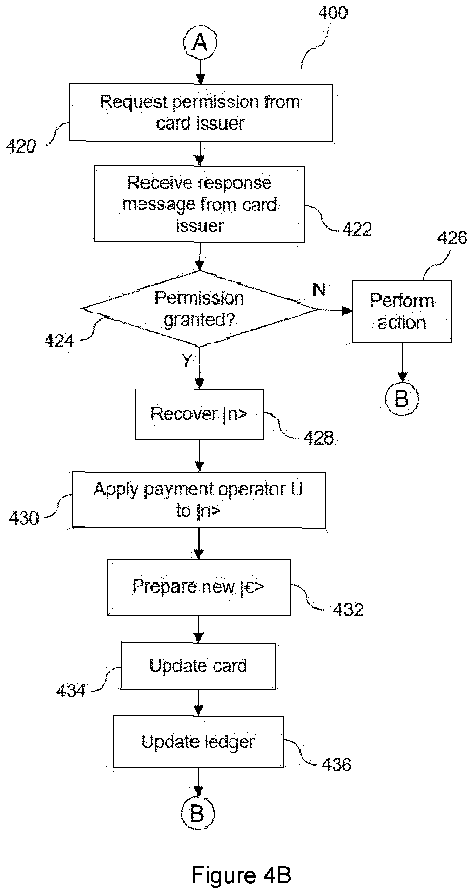

Figures 4A and 4B show a flow diagram of a method 400 for enabling use of a quantum card which carries a quantum currency, in accordance with an aspect of the present disclosure. In particular, the method 400 is a method for performing a transaction (e.g. a payment transaction) using a quantum card. The method 400 may be carried out at a quantum card reader, for example a point-of-sale device, which may be implemented at a computing system such as the example computing system 100 shown in figure 1. As will be appreciated, the method 400 may be carried out immediately after the method 300 has been completed i.e. using a quantum card after the quantum card has been loaded with quantum currency.

At step 402 the method 400 comprises receiving a quantum card at a quantum card reader. The quantum card is associated with a user and comprises a currency state $|€\rangle$, for example loaded onto the card via the method 300. As explained above, the currency state $|€\rangle$ is a quantum state that is representative of an amount of a quantum currency.

The quantum card received at step 402 comprises a quantum memory and a classical memory. An example computing system 100 suitable for implementing the quantum card is shown in figure 1. The quantum memory of the quantum card (e.g. the quantum computing unit 142 and/or the quantum memory unit 144) comprises a quantum system (e.g. a plurality of qubits) which stores the currency state $|€\rangle$. The classical memory (e.g. memory unit 104) comprises a serial number. The serial number may be a unique number that can be used to identify the quantum card. The serial number is associated with a user (c.f. step 306 in figure 3). Receiving the quantum card at step 402 may involve e.g. connecting the quantum card to the quantum card reader such that the quantum card reader is able to access the classical memory and the quantum memory of the quantum card. In particular, receiving the quantum card may involve reading the serial number of the card from the classical memory.

At step 404 the method 400 comprises receiving a request for a transaction. In particular, a request for a transaction may be received by the quantum card reader at step 404. The request for a transaction may be received in the form of a command (e.g. 'transfer funds to account number #') and may stipulate an amount of quantum currency (e.g. number of units $n$ requested). The transaction may be a monetary transaction involving the quantum currency. In examples, the user may wish to use their quantum card to pay an amount of quantum currency to an operator associated with the quantum card reader. Alternatively, the user may wish to use their quantum card to receive an amount of quantum currency from an operator associated with the quantum card reader.

At step 406 the method 400 comprises requesting permission from the user to perform the transaction. In particular, requesting permission from the user comprises sending a request message to a device associated with the user. In an example, an electronic message in the form of an email may be sent from the quantum card reader to an email address associated with the user. Alternatively, an electronic message in the form of an SMS message may be sent from the quantum card reader to a mobile phone number associated with the user. Further alternatively, a message may be sent to the device of the user for display using a dedicated application. The electronic message may be received by any suitable user device (e.g. a phone, tablet or laptop) associated with the user. The email address or mobile phone number associated with the user may be retrieved by the quantum card reader from e.g. the classical memory of the quantum card, or from an online ledger of information (such as the ledger outlined above with respect to steps 306, 308 and 316 of figure 3). Alternatively, the email address or mobile phone number associated with the user may be retrieved by the quantum card reader from a central issuing authority such as a bank. The electronic message may include a link or response instructions allowing the user to respond to the electronic message.

At step 408 the method 400 comprises receiving a response message from the device associated with the user. In particular, a response message is received by the quantum card reader at step 408. In examples, the response message includes information regarding whether or not the user grants permission for the transaction. The response message may be an electronic message such as an email or SMS sent from the user device (e.g. a phone, tablet or laptop) to the quantum card reader, and may include suitable instructions that can be parsed by the quantum card reader (e.g. 'permit transaction' or 'deny transaction').

At step 410 the method 400 comprises determining whether the user grants permission for the transaction. The determination is made by inspecting the contents of the response message received from the device associated with the user in step 408. For example, the response message may be parsed by the quantum card reader in step 408.

If the response message received at step 408 indicates that the user does not grant permission for the transaction (in which case the 'N' branch from step 410 is followed), then the method 400 proceeds to step 412 where an action is performed by the quantum card reader.

Where the user does not grant permission for the transaction then this may indicate that the quantum card has been lost and/or is being used by a malicious actor, or that the quantum card is a potential forgery. To ensure that the card cannot be used by said malicious actor, the action performed at step 412 may comprise modifying the currency state stored by the quantum card. Modifying the currency state may comprise measuring and/or destroying the currency state. For example, destroying the currency state may comprise causing the quantum system (i.e. the quantum system on the quantum card which is capable of storing the currency state) to enter its ground state. This will effectively 'wipe' the currency state from the quantum card and cause the card to effectively hold zero balance. Where the quantum system is a collection of qubits, destroying the currency state may comprise causing each qubit to enter its ground state. Advantageously, causing the quantum system to enter its ground state results in removing all traces of the currency state from the quantum card.

After performing the action at step 412, the method 400 proceeds to step 414 where a notification is sent to the device associated with the user of the quantum card, and the processing of the attempted transaction by the quantum card reader ends. For example, an email or SMS may be sent to a device associated with the user, notifying the user that the currency state on the quantum card has been modified and/or destroyed, and that the quantum card can no longer be used to carry out transactions. Advantageously, the method 400 provides a simple and convenient way to destroy quantum currency that has fallen into the hands of a malicious actor.

If the response message received at 408 indicates that the user does grant permission for the transaction (in which case the 'Y' branch from step 410 is followed), then the method 400 proceeds to step 416 where information from the ledger is retrieved. As noted above with respect to steps 306, 308 and 316 of figure 3, the ledger contains information about users, such as account numbers, user balances (i.e. the amount of currency the user holds in an account) and the serial numbers of any quantum cards that have been issued to each respective user, and the currency balances on said cards. The information retrieved from the ledger at step 416 may include the current balance held on the quantum card. As part of step 416, the quantum card reader may retrieve the serial number of the quantum card from the classical memory of the quantum card, and use this serial number to identify the appropriate balance in the ledger.

At step 418 the method 400 comprises determining whether the quantum card has sufficient funds for the transaction. This step is based on a comparison between the balance of the quantum card retrieved from the ledger in step 416, and the amount of the transaction requested in step 404. Advantageously, the quantum card reader may be configured to ensure that the quantum card contains sufficient funds before measuring, modifying and/or disturbing the currency state $|€\rangle$.

If it is determined at step 418 that the quantum card contains insufficient funds for the transaction (in which case the 'Y' branch from step 418 is followed), then the method 400 proceeds to step 414 where the user is notified of the issue, and the processing of the attempted transaction by the quantum card reader ends. For example, an email or SMS may be sent to a device associated with the user notifying them of the issue.

If it is determined at step 418 that the quantum card contains sufficient funds for the transaction (in which case the 'N' branch from step 418 is followed), then the method 400 proceeds to step 420 (figure 4B) where permission for the transaction is requested from the quantum card issuer authority, e.g. the quantum card issuer authority that carried out method 300 and loaded the currency state |€⟩ onto the quantum card. The request may be sent from the quantum card reader to the quantum card issuer authority via any suitable means, for example via email, SMS or any other appropriate communication protocol.

At step 422 the method 400 comprises receiving a response message from the quantum card issuer authority. The response message may be in the form of an email or SMS and may include an instruction. The response message may be sent from the quantum card issuer authority to the quantum card reader via any suitable means, for example via email, SMS or other communication protocol.

At step 424 the method 400 comprises determining whether the quantum card issuer authority grants permission for the transaction. The determination is made by inspecting the contents of the response message received from the quantum card issuer authority in step 420.

If the response message received at 422 indicates that the quantum card issuer authority does not grant permission for the transaction (in which case the 'N' branch from step 424 is followed), then the method 400 proceeds to step 426 where an action is performed.

The action performed at step 426 may be based on an instruction in the response message received in step 420. If the quantum card issuer authority does not grant permission for the transaction then this may indicate that the quantum card issuer authority believes that the quantum card is being used by a malicious actor, or that the quantum card is a forgery. To ensure that the card cannot be used by said malicious actor, the action performed at step 426 may comprise modifying the currency state stored by the quantum card. Modifying the currency state may comprise measuring and/or destroying the currency state. For example, destroying the currency state may comprise causing the quantum system (i.e. the quantum system on the quantum card which is capable of storing the currency state) to enter its ground state. This will effectively 'wipe' the currency state from the quantum card and cause the card to effectively hold zero balance. Where the quantum system is a collection of qubits, destroying the currency state may comprise causing each qubit to enter its ground state.

After performing the action at step 426, the method 400 proceeds to step 414 (Figure 4A) where a notification is sent to the user associated with the quantum card, and the processing of the attempted transaction by the quantum card reader ends. For example, an email or SMS may be sent to a device associated with the user notifying them of the issue.

If the response message received at 422 indicates that the quantum card issuer authority does grant permission for the transaction (in which case the 'Y' branch from step 424 is followed), then the method 400 proceeds to step 428 where the balance state is recovered from the quantum card. In the case where the currency state |€⟩ stored on the quantum card is the balance state |n⟩ (see discussion above with respect to step 312 of method 300), recovering the balance state |n⟩ at step 428 involves reading the currency state |€⟩ from the quantum card. Where the currency state stored on the quantum card is not identical to the balance state (see discussion above with respect to step 312 of the method 300), recovering the balance state |n⟩ at step 428 comprises e.g. applying an inverse Quantum Fourier Transform on the currency state |€⟩.

At step 430 the method 400 comprises applying a payment operator to the balance state. The payment operator is applied by the quantum card reader to the balance state |n⟩ recovered in step 428.

For transactions where the balance state is to be reduced (i.e. a payment transaction), a payment operator $U$ is applied to the balance state:

$$U|n\rangle = |n-1\rangle$$

For transactions where the balance state is to be increased (i.e. a receive transaction), a receive operator $U^\dagger$ is applied to the balance state:

$$U^\dagger|n\rangle = |n+1\rangle$$

Each of the operators $U$ and $U^\dagger$ may be applied to the balance state multiple times according to the size of the transaction. For example, to pay 5 units of quantum currency, the operator $U$ may be applied to the balance state |n⟩ 5 times. Since each application of $U$ only brings the quantum state one level down in the energy spectrum, then for paying 5 units of quantum money, we need to reduce the energy level one by one (for each application of $U$) until we reach to the energy level 5 levels lower than the initial configuration.

At step 432 the method 400 comprises preparing a new currency state |€$_{new}$⟩. The new currency state |€$_{new}$⟩ may be prepared by the quantum card reader in the same way that the quantum card issuer authority prepared the currency state |€⟩ in step 312 of the method 300. For further details on how to implement step 432, we refer to the description of step 312, outlined above.

At step 434 the method 400 comprises updating the quantum card using the new currency state |€$_{new}$⟩ prepared in step 432. Advantageously, updating the currency state allows the quantum card to be used in further transactions. The

new currency state $|\text{€}_{new}\rangle$ may be loaded onto the quantum card by the quantum card reader in the same way that the quantum card issuer authority loaded the currency state $|\text{€}\rangle$ in onto the quantum card in step 314 of the method 300. For further details on how to implement step 434, we refer to the description of step 314, outlined above.

At step 436 the method 400 comprises updating the ledger. In particular, the ledger is updated by the quantum card reader to reflect the changes made to the currency state on the quantum card. The ledger may be updated by the quantum card reader in the same or that the quantum card issuer authority updated the ledger in step 316. For further details on how to implement step 436, we refer to the description of step 316, outlined above.

The method 400 ends at step 414 where a notification is sent to the user. In particular, a notification may be sent from the quantum card reader to the device associated with the user of the quantum card. The notification may be in the form of an email or SMS, and may include information about the changes made to the currency state on the quantum card.

Example system

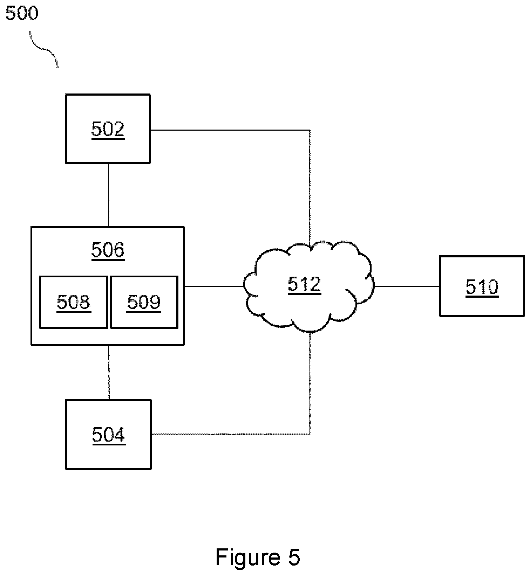

Figure 5 shows an example system 500 for enabling use of a quantum card which carries a quantum currency, in accordance with an aspect of the present disclosure. The example system 500 can be used to implement any or all of the methods 300 and 400 explained above and shown in figures 3, 4A and 4B.

The system 500 comprises a quantum card issuer authority 502, a quantum card reader 504 and a quantum card 506. The quantum card issuer authority 502, quantum card reader 504 and quantum card 506 may be individually or collectively embodied by the example computing system 100 shown in figure 1.

The quantum card 506 comprises a quantum memory 508 and a classical memory 509. The quantum memory 508 comprises a quantum system capable of storing a currency state generated by the quantum card issuer authority 502 and/or the quantum card reader 504. The classical memory 509 is configured to store a serial number associated with a user. The system 500 further comprises a third party computing system 510, for example a merchant computing system or a ledger computing system.

Figure 5 shows the third party computing system 510 in communication with the quantum card issuer authority 502, the quantum card reader 504 and the quantum card 506 via network 512. The third party computing system 510 may be similar to the third party computing system 204 shown in figure 2. The network 512 may be similar to the network 202 shown in figure 2. The third party computing system 510 may store a ledger of information, such as the ledger discussed above in relation to methods 300 and 400.

Alternatively, the ledger discussed above in relation to methods 300 and 400 may be stored at the quantum card issuer authority 502 or the quantum card reader 504.

Example implementation using real data

The following is an example execution using real data.

Consider the serial number function $f:\{0,1\}^2 \to \{0,1\}^2$, defined by:

$$f(00) = f(10) = 00$$

$$f(01) = f(11) = 11$$

wherein $s = 10$ is the period of this function.

To generate quantum currency state, an issuer authority performs the following steps:

1. Prepare a balance state $|n\rangle = |11\rangle$ and
2. Prepare a currency state by:

a. Applying a Quantum Fourier Transform on the balance state $|n\rangle = |11\rangle$,

$$QFT|11\rangle = \frac{1}{2}(|00\rangle - i|01\rangle - |10\rangle + i|11\rangle)$$

b. Applying $U_f|k\rangle|0\rangle = |k\rangle|f(k)\rangle$ to each term,

$$U_f(QFT|11\rangle) = \frac{1}{2}(|00\rangle|00\rangle - i|01\rangle|11\rangle - |10\rangle|00\rangle + i|11\rangle|11\rangle)$$

c. Using the result as the currency state $|\text{€}\rangle$

$$|\text{€}\rangle = U_f(QFT|11\rangle)$$

The currency state $|\text{€}\rangle$ is the quantum currency state associated with the value $|11\rangle$, or $|3\rangle$ which can be stored on a quantum card. As will be appreciated, it is not possible to reconstruct the balance state $|11\rangle$, or $|3\rangle$ without knowing the function $f$ or the period $s$. The function $f$ is the serial number function that generates a random number as the serial number and is known only to the issuer authority. The period $s$ is also part of the private key which belongs to the cardholder; the quantum card reader should not have access to the period $s$. The Quantum Card Reader (QCR) has only access to the public key and with permission from the user can verify the card.

A verification process can be performed on the currency state $|\text{€}\rangle$ by e.g. the issuer authority that issued the currency. The issuer authority may perform the following actions for verifying the authenticity of the currency state $|\text{€}\rangle$ before acceptance:

3. Apply the inverse of $U_f$ followed by an inverse of QFT, i.e. $QFT^{-1}(U_f^{-1}|\psi\rangle)$

4. Measure this state $QFT^{-1}(U_f^{-1}|\psi\rangle)$ ; if the structure of the measured state can be matched with the structure of $f$ then the currency state $|\text{€}\rangle$ can be verified as legitimate and accepted, otherwise the currency state $|\text{€}\rangle$ is rejected.

Since the currency state $|\text{€}\rangle$ is dependent on the serial number function $f$, and the issuer authority knows $f$, the issuer authority can apply the inverse of $U_f$ followed by an inverse of QFT, i.e., $QFT^{-1}(U_f^{-1}|\psi\rangle)$ . Therefore the verification step can be performed by the issuer authority. As will be appreciated, it is not possible to verify the currency state $|\text{€}\rangle$ without knowing the function $f$ or the period $s$.

The Quantum Card is similar to a debit card, and the issuer needs to confirm the transaction. But other actors can also verify the stored currency state by measuring the final state; if there is any periodicity in the results of the measurement then the quantum currency state can be verified on this basis. As will be appreciated, observing the periodicity doesn't necessarily mean that the verifier knows $s$ (the period). But if $f$ and $s$ are known, then it is possible to update the currency state $|\text{€}\rangle$. So the issuer authority (having knowledge of $f$ and $s$) can update $|\text{€}\rangle$, but other actors (lacking knowledge of $f$ and $s$) can only verify $|\text{€}\rangle$.

Some embodiments may assign computer processing tasks to recipient processors, for example, but not limited to CPUs, GPUs, DSPs, GP-GPUs, quantum processor and/or processors optimised for artificial intelligence tasks. In such embodiments, the processors are the recipients and the processing tasks are the opportunities. In such embodiments, in for example, a complex cloud computing infrastructure, a large number of tasks, of differing types, requiring execution may be received and a large number of processors may be housed within the cloud computing infrastructure.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A method for implementation by a quantum card reader, the method comprising:

   receiving a quantum card associated with a user, wherein the quantum card comprises a currency state, wherein the currency state is a quantum state that is representative of an amount of a quantum currency;
   receiving a request for a transaction;
   requesting permission from the user to perform the transaction, wherein requesting permission from the user comprises sending a request message to a device associated with the user;
   receiving a response message from the device associated with the user; and
   if the response message indicates that the user does not grant permission for the transaction, modifying the currency state.

2. The method of claim 1, wherein modifying the currency state comprises:
   measuring and/or destroying the currency state, wherein destroying the currency state comprises causing the quantum system to enter its ground state.

3. The method of claim 1 or claim 2, wherein the method further comprises:
   if the response message from the device associated with the user indicates that the user grants permission for the transaction, updating the currency state and a ledger based on the transaction.

4. The method of claim 3, wherein updating the currency state comprises:

   recovering a balance state from the currency state, wherein the balance state is a quantum state that is representative of an amount of the quantum currency;
   applying a unitary payment operator on the balance state to determine an updated balance state;
   preparing an updated currency state from the updated balance state; and
   loading the updated currency state onto the quantum card.

5. The method of any preceding claim, wherein recovering the balance state from the currency state comprises:
   applying an inverse Quantum Fourier Transform on the currency state.

6. The method of any preceding claim wherein the method further comprises:

if the response message from the device indicates that the user grants permission for the transaction, reading a balance associated with the user from a ledger; and
if the balance is less than the transaction amount, sending a notification to the device associated with the user.

7. The method of any preceding claim, wherein the method further comprises:

requesting permission from a quantum card issuer authority to perform the transaction by sending a request message to the quantum card issuer authority;
receiving a response message from the quantum card issuer authority; and
if the response message indicates that the quantum card issuer authority grants permission for the transaction, updating the currency state on the card and updating a ledger based on the transaction; or
if the response message from the quantum card issuer authority indicates that the quantum card issuer authority does not grant permission for the transaction, receiving an instruction from the quantum card issuer authority to modify the currency state by measuring and/or destroying the currency state, wherein destroying the currency state comprises causing the quantum system to enter its ground state.

8. The method of any preceding claim, wherein the quantum card comprises a quantum memory and a classical memory, wherein the quantum memory comprises a quantum system capable of storing the currency state, and wherein the classical memory is configured to store a serial number associated with a user.

9. A method for implementation by a quantum card issuer authority, the method comprising:

receiving a quantum card, wherein the quantum card comprises a quantum memory and a classical memory, wherein the quantum memory comprises a quantum system capable of storing a currency state;
preparing a currency state based on a balance associated with a user, wherein the currency state is a quantum state that is representative of an amount of a quantum currency; and
loading the currency state in the quantum memory of the quantum card.

10. The method of claim 9, wherein the classical memory comprises a serial number, and wherein the method further comprises:

reading the serial number from the classical memory; and
associating the user with the serial number.

11. The method of claim 9 or claim 10, wherein the method further comprises:
identifying the balance associated with the user from a ledger.

12. The method of any one of claims 9 to 11, wherein the method further comprises:

generating a balance state, wherein the balance state is a quantum state that is representative of an amount of the quantum currency; and
applying a Quantum Fourier Transform on the balance state.

13. A system comprising:

a quantum card reader configured to carry out the method of any one of claims 1 to 8; and
a quantum card comprising a quantum memory and classical memory, wherein the quantum memory comprises a quantum system capable of storing a currency state, and wherein the classical memory is configured to store a serial number associated with a user.

14. The system of claim 13, wherein the system further comprises:
a quantum card issuer authority configured to carry out the method of any one of claims 9 to 12.

15. A quantum card for storing a quantum currency, the quantum card comprising a quantum memory and a classical memory, wherein the quantum memory comprises a quantum system capable of storing a currency state generated by a quantum card reader or a quantum card issuer authority, and wherein the classical memory is configured to store a serial number associated with a user.

100

130

102

104

106

108

110

156

146    148

150    152

140

142

154

144

Figure 1

200

100

202

204

Figure 2

300

302 — Receive card

304 — Read serial number

306 — Associate a user with the serial number

308 — Identify balance

310 — Generate |n>

Prepare |€> — 312

Load |€> — 314

Update ledger — 316

Notify user — 318

Figure 3

Figure 4A

400

(A)

**Request permission from card issuer** — 420

**Receive response message from card issuer** — 422

**Permission granted?** — 424

N → **Perform action** — 426 → (B)

Y ↓

**Recover |n>** — 428

**Apply payment operator U to |n>** — 430

**Prepare new |€>** — 432

**Update card** — 434

**Update ledger** — 436

(B)

Figure 4B

500

Figure 5

Europäisches
Patentamt
European
Patent Office
Office européen
des brevets

**EUROPEAN SEARCH REPORT**

**Application Number**

EP 24 16 8514

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/129486 A1 (OHKUMA KENJI [JP] ET AL) 15 June 2006 (2006-06-15) * paragraphs [0058], [0086]; claim 1 * | 1-15 | INV. G06Q20/06 G06N10/60 G06Q20/34 G06Q20/38 |
| A | JAROSLAV HRUBÝ: "New physical attacks and security of smart-card", ASIACRYPT 2001, 9 December 2001 (2001-12-09), XP055375503, * the whole document * | 1-15 | |
| A | WO 2007/103978 A2 (FIRST DATA CORP [US]; KUBO TAKAYUKI [DE]; ALBRECHT NORBERT [DE]) 13 September 2007 (2007-09-13) * page 4; claim 1 * | 1-15 | |
| A | JOGENFORS JONATHAN: "Quantum Bitcoin: An Anonymous, Distributed, and Secure Currency Secured by the No-Cloning Theorem of Quantum Mechanics", 2019 IEEE INTERNATIONAL CONFERENCE ON BLOCKCHAIN AND CRYPTOCURRENCY (ICBC), IEEE, 14 May 2019 (2019-05-14), pages 245-252, XP033572047, DOI: 10.1109/BLOC.2019.8751473 [retrieved on 2019-06-28] * abstract * | 1-15 | TECHNICAL FIELDS SEARCHED (IPC) G06N G06Q |
| A | CN 113 516 461 A (UNIV CHINA THREE GORGES CTGU) 19 October 2021 (2021-10-19) * claim 1 * | 1-15 | |
| A | GB 2 616 406 A (ARQIT LTD [GB]) 13 September 2023 (2023-09-13) * the whole document * | 1-15 | |

-/--

The present search report has been drawn up for all claims

| Place of search | Date of completion of the search | Examiner |
|---|---|---|
| The Hague | 2 October 2024 | Wolles, Bart |

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 116 546 500 A (CHINA TELECOM CO LTD) 4 August 2023 (2023-08-04) * the whole document * | 1-15 | |
| A,P | Koen Groenland: "The professional's guide to Quantum Technology", , 21 June 2024 (2024-06-21), XP002812300, Retrieved from the Internet: URL:https://www.quantum.amsterdam/guide-to -quantum [retrieved on 2024-10-02] | 1-15 | |
| | | | TECHNICAL FIELDS SEARCHED (IPC) |

The present search report has been drawn up for all claims

| Place of search | Date of completion of the search | Examiner |
|---|---|---|
| The Hague | 2 October 2024 | Wolles, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8514

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2024

| Patent document cited in search report | | Publication date | Patent family member(s) | | Publication date |
|---|---|---|---|---|---|
| US 2006129486 | A1 | 15-06-2006 | CN | 1820278 A | 16-08-2006 |
| | | | EP | 1683101 A2 | 26-07-2006 |
| | | | JP | 2006048153 A | 16-02-2006 |
| | | | US | 2006129486 A1 | 15-06-2006 |
| | | | WO | 2006011679 A2 | 02-02-2006 |
| WO 2007103978 | A2 | 13-09-2007 | EP | 1833009 A1 | 12-09-2007 |
| | | | WO | 2007103978 A2 | 13-09-2007 |
| CN 113516461 | A | 19-10-2021 | NONE | | |
| GB 2616406 | A | 13-09-2023 | GB | 2616406 A | 13-09-2023 |
| | | | WO | 2023144503 A1 | 03-08-2023 |
| CN 116546500 | A | 04-08-2023 | NONE | | |

EPO FORM P0459

For more details about this annex : see Official Journal of the European Patent Office, No. 12/82